# NEW EUROPEAN PATENT SPECIFICATION

(11) **EP 0 450 829 B2**
(45) Date of publication and mention of the opposition decision: **04.09.2002**
(45) Mention of the grant of the patent: 11.01.1995
(21) Application number: 91302607.6
(22) Date of filing: 26.03.1991
(51) Int. Cl.: G01P 15/08, G01R 19/25, G01D 3/02

(54) **Intelligent programmable sensor**
Intelligenter programmierbarer Sensor
Capteur intelligent et programmable

(30) Priority: 30.03.1990 US 502353
(43) Date of publication of application: 09.10.1991
(73) Proprietor: TEXAS INSTRUMENTS INCORPORATED, Dallas Texas 75265 (US)
(72) Inventor: Tarrant, Richard T., Richardson, Texas 75081 (US)
(74) Representative: Legg, Cyrus James Grahame

(56) References cited:
- EP-A- 0 169 414
- EP-A- 0 277 006
- EP-A- 0 348 123
- DE-C- 3 544 095
- US-A- 4 494 183
- US-A- 4 651 292
- ELECTRONIC DESIGN, 26th October 1989, pages 39-40, 42, 46; M. LEONARD: "IC fabrication techniques sculpt silicon sensors"
- etz Bd. 105 (1984) Heft 15, Pages 800-803, Martin Komischke et al. "Sensoren gekoppelt mit Mikroprozessoren - Möglichkeiten der Vorverarbeitung und Sensorschnittstelle"
- Horst Völz, "Elektronik", Akademie-Verlag Berlin, 1986, pages 824-829

## Description

### TECHNICAL FIELD OF THE INVENTION

The present invention relates to intelligent programmable sensing in general, and more particularly to an apparatus and method for intelligently and programmably sensing physical variables using a silicon sensor.

### BACKGROUND OF THE INVENTION

Throughout the world, sensors systems measure a broad spectrum of physical variables such as motion, acceleration, pressure, temperature, and flow. Some sensor systems incorporate digital electronic and computer technology. These types of sensor systems typically comprise a portion of the system that generates and processes analog signals and a portion that converts the analog signals to digital signals and further processes the digital signals. Sensing transducers directly measure the physical variables to generate the analog signals. Electronic circuits and digital processors convert the analog signals to digital signals and process the digital signals. Over the years, digital electronic components have become less expensive to design and manufacture. However, analog components have not enjoyed the same reductions in design and manufacturing costs. Therefore, a need exists for inexpensive analog sensing components for electronic sensor systems.

In recent years, electronic system designers have come to realize benefits inherent in distributed data processing systems. These electronic systems, in varying degrees, receive and process data at a remote site before sending the data to a central point for computer analysis and decision making. Benefits in distributed data processing systems include lower system costs and more rapid and complete data analysis. If an electronic sensor system could employ distributed data processing, then it could also realize these benefits. Thus, there is a need for an electronic sensor system that uses distributed data processing.

Silicon sensors comprise transducers that are fabricated from a silicon base. They have the potential to provide inexpensive analog sensing components that incorporate distributed data processing. Silicon transducers now exist that can produce analog signals to measure physical variables such as motion, acceleration, pressure, temperature, and flow. The advantages of silicon transducers are evident from a review of the following articles: W. R. Iversen, The Vendors Are Betting Their Chips on Silicon Sensors, ELECTRONICS, July 1989; and M. Leonard, IC Fabrication Techniques Sculpt Silicon Sensors, ELECTRONIC DESIGN, October 26, 1989. To date, however, no one has come forward with a silicon sensor system that inexpensively provides distributed data processing.

Some designers have attempted to incorporate distributed data processing in silicon sensor systems by including a silicon sensor transducer, demodulator, sensor amplifier and voltage-to-frequency converter on a single silicon base. Other manufacturers choose not to incorporate all of the sensor electronic circuitry on the same piece of silicon. Instead they combine a silicon transducerand analog signal circuitry on a single silicon base and interconnect analog-to-digital conversion and other processing circuitry on an adjacent silicon base in a single electronic system package. While these applications represent improvements over prior technology, the way in which they apply signal conditioning and amplifying circuitry reduces the number of applications for the silicon sensors. This is because these sensors amplify and condition the analog signals to a fixed degree. These sensor systems have limited utility in applications requiring other degrees of analog signal conditioning.

Silicon sensor systems having a wider variety of potential uses can be produced more economically than such systems having only a limited number of uses. This is because manufacturers can produce more of them and spread out original design and development costs over a larger number of individual systems. Thus, manufacturers cannot mass produce silicon sensor systems that amplify and condition analog signals to only a fixed degree as inexpensively as systems having a wider variety of applications. This limitation causes those types of silicon sensor systems to be expensive, so they cannot satisfy the need of an inexpensive silicon sensor system that uses distributed data processing. Thus, there is yet the need for an inexpensive silicon sensor system that fully uses distributed data processing.

### SUMMARY OF THE INVENTION

In view of the foregoing disadvantages inherent in known types of silicon sensor systems now present in the prior art, it is an object of the present invention to provide an intelligent, programmable silicon sensor system wherein a manufacturer can first fabricate the sensor and the user can later program it for a specific application. Moreover, once the sensor is in place the user can reprogram the sensor to refine its sensing parameters as needs dictate.

According to one aspect of the present invention there is provided an intelligent programmable sensing apparatus using elements mounted on a silicon base, said elements comprising:
a transducer for sensing physical variables and generating a plurality of raw analog signals representing said sensed physical variables; and
a configurable analog signal conditioner receiving said raw signals from said transducer, said configurable analog signal conditioner conditioning said raw analog signals to transmit conditioned analog signals, said configurable analog signal conditioner including:
   a first configurable memory for storing at least one signal conditioning instruction for directing said configurable analog signal conditioner, said first configurable memory being reprogrammable to contain different sets of signal conditioning instructions at different times and being adapted for connection to an external programming device supplying the different sets of signal conditioning instructions.

According to a second aspect of the present invention there is provided a method of sensing a physical variable using an intelligent programme sensor according to the first aspect of the invention comprising the steps of:
sensing physical variables with said transducer and generating a plurality of raw signals representing said sensed physical variables;
receiving said raw signals from said transducer in said configurable analog signal conditioner;
conditioning said raw signals in said configurable analog signal conditioner;
transmitting a plurality of conditioned signals from said configurable analog signal conditioner; and
storing at least one signal conditioning instruction for directing operations of said analog configurable signal conditioner in said first configurable memory, said storing including reprogramming said first configurable memory to contain different sets of signal conditioning instructions at different times and said storing including receiving the different sets of signal conditioning instructions from an external programming device.

A sensor according to the invention allows a manufacturer to design and fabricate a single device for many applications. The user can later program the sensor for a specific application. The intelligent programmable sensor of the present invention pre-processes raw data to increase overall system efficiency.

In one embodiment of the invention, the sensor includes a sensing transducer on a single silicon substrate base that generates an analog signal proportional to the physical variables it senses. A configurable analog signal conditioner receives the analog signal from the sensing transducer and amplifies, filters, and otherwise conditions the signal and directs the analog signal to a configurable analog-to-digital converter. The sensor transducer, configurable analog signal conditioner and digital converter reside on the same silicon base.

Another embodiment of the present invention includes an intelligent programmable silicon sensor on a single silicon base that comprises a silicon sensor transducer which generates an analog signal proportional to the physical variables to which it responds. A configurable analog signal conditioner receives the analog signal that the sensing transducer generates and amplifies, filters, and otherwise conditions the analog signal. The signal conditioner directs this conditioned analog signal to a configurable analog-to-digital converter.

The sensor system may further include a configuration and results bus that communicates among the analog signal conditioner, the analog-to-digital converter, a program memory, a digital signal processor and a communications interface. These elements all reside on the same silicon base.

A system may comprise a plurality of intelligent sensors as described above, together with a supervisor monitor/control computer. The supervisor monitor/control computer communicates among the intelligent programmable sensors to program the operation of intelligent programmable sensor components as necessary to perform sensing functions according to the sensor system application.

A technical advantage of the present invention is that it provides a single silicon sensor that a manufacturer can fabricate and a user can program for the specific application.

Another technical advantage of the present invention is that it provides a device that the user can reprogram to provide different data under the control of real-time supervisory computer or by human intervention.

Yet another technical advantage of the present invention is that the user can install multiple sensors of the same type and program them to form a total system for complex or large scale sensor monitoring and control.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 illustrates a block diagram of the intelligent, programmable sensor and related system according to the present invention;
FIGURE 2 is a combination side cut-away and block diagram of the apparatus illustrating placement of the intelligent programmable sensor components on a single silicon chip; and
FIGURE 3 shows an alternative embodiment of the present invention wherein the sensing transducer, configurable analog signal conditioner, and configurable analog-to-digital converter reside on a single silicon base.

### DETAILED DESCRIPTION OF THE INVENTION

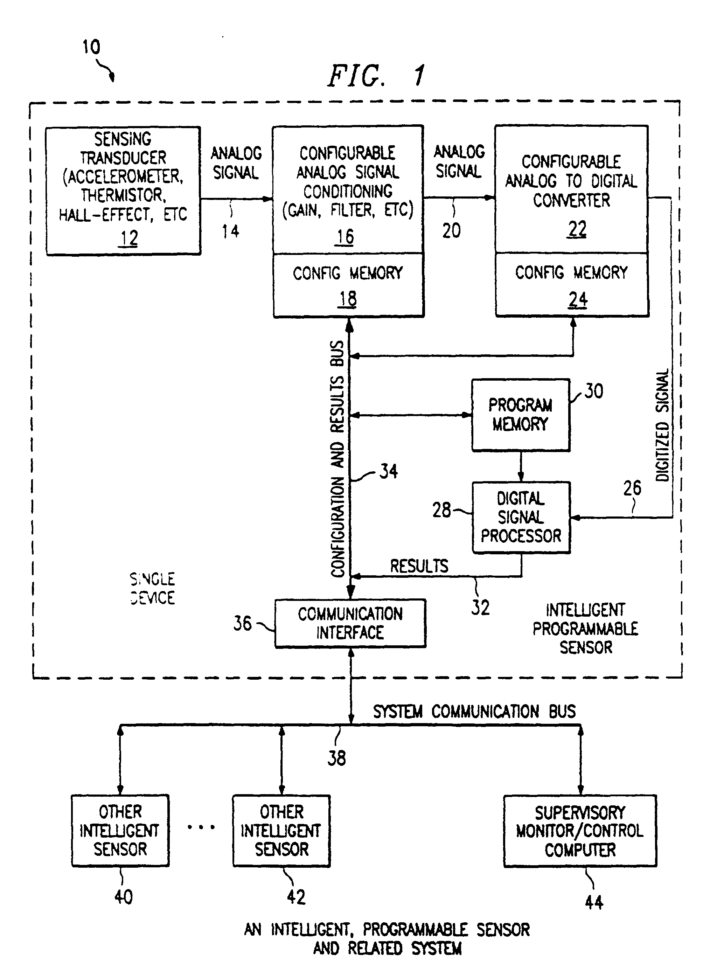

FIGURES 1-3 of the drawings, in which like numerals indicate like and corresponding parts of the various drawings, aid in developing a complete understanding of preferred embodiments of the present invention.

FIGURE 1 provides a block diagram of a preferred embodiment of an intelligent programmable sensor 10 according to the present invention. Intelligent programmable sensor 10 includes sensing transducer 12 that sends analog signal 14 to configurable analog signal conditioner 16. Configurable analog signal conditioning circuitry 16 includes configurable memory 18. Configurable analog signal conditioner 16 sends analog signal 20 to configurable analog-to-digital converter 22. Configurable analog-to-digital converter 22 includes configurable memory 24. Configurable analog-to-digital converter 22 generates digitized signal 26 and sends this signal to digital signal processor 28. Digital signal processor 28 also receives processing commands from program memory 30 and sends results 32 to configuration and results bus 34.

Configuration and results bus 34 sends configuration commands to configuration memory 18 and to configuration memory 24. Configuration and results bus 34 further sends instructions to program memory 30. Configuration and results bus 34 may also read existing configurations of configurable memories 18 and 24 and instructions in program memory 30. Configuration and results bus 34 communicates with communications interface 36. Communications interface 36 communicates with system communications bus 38. System communications bus 38 communicates among other intelligent sensors, including intelligent programmable sensor 40 and intelligent programmable sensor 42. System communications bus 38 also sends intelligent programmable sensor results, and configurable memory 18 and 24 and program memory 30 status to supervisor monitor/control computer 44. Supervisor monitor/control computer 44 sends program information to intelligent programmable sensor 10, as well as other intelligent sensors, including intelligent programmable sensors 40 and 42.

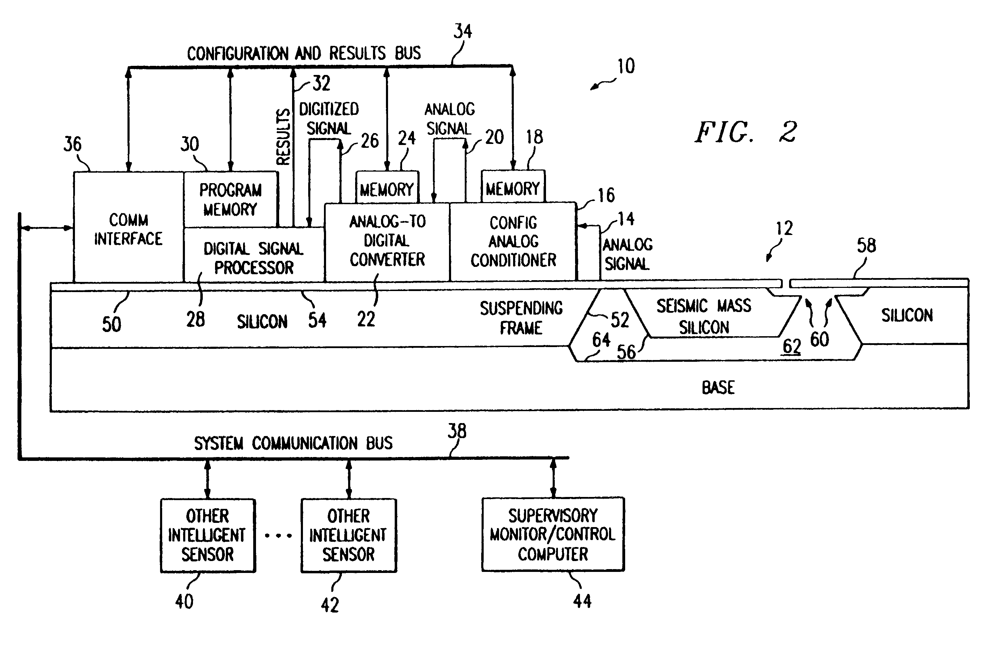

FIGURE 2 shows a part cut-away side view/part block diagram for relating the configuration of the present invention. Silicon transducer 12 of FIGURE 2 operates as silicon accelerometer. Devices such as these have use as crash-sensors for air bag development, motion sensors for active suspension systems. They also find use in aerospace and military applications.

The components as described with respect to FIGURE 1 (as well as the inter-component signal flow) are shown as block diagram elements rigidly mounted as a single unit to sensing transducer 12. FIGURE 2 further shows sensor transducer 12 as a cantilever design having one end of beam 50 remaining rigidly fixed to the silicon suspending frame 52 at interface 54 while the other end of beam 50 attaches to free swinging seismic mass 56. A series of flexible tabs 58 extends over underlying shelves 60 around three sides of seismic mass 56 to supply mechanical stops to prevent beam 50 from breaking during over-ranging in all three axis of motion. Gap 62 appears between seismic mass 56 and base 64 to provide over-range damage protection from resilient oscillations of seismic mass 56. The device completely exposes the top side of the intelligent programmable silicon sensor 10 to permit the addition of the remaining components of the present embodiment. These components may be implanted into silicon substrate 52.

Configurable analog signal conditioner 16 comprises conditioning circuitry and configurable memory 18. The conditioning circuitry may provide signal gain and, possibly, filtering. For example, signal conditioner 16 may include an integral amplifier together with a signal filter to reduce noise from sensing transducer 12. The intelligent programmable sensor of the present invention also may incorporate temperature compensation of analog signal 14 as a feature of analog signal conditioner 16. This would more accurately make analog signal 20 respond to sensing transducer 12 acceleration output without any adverse temperature effects from the sensor environment. Configurable memory 18 comprises a separate non-volatile memory. For example, configurable memory 18 could be a register that would change the gain of analog signal 14.

Configurable analog-to-digital converter 22 comprises analog-to-digital conversion circuitry and configurable memory 24. Configurable memory 24 stores operational commands that direct analog-to-digital converter 22 to sample analog signal 20 at a particular rate, and to convert that signal to digitized signal 26 at a certain rate. Also, these commands may program the number of bits of information that comprise digitized signal 26. Examples of analog-to-digital input/output systems that may perform the functions of analog-to-digital converter 22 are TLC32040 and TLC32041, manufactured by Texas Instruments Inc. of Dallas, Texas. These devices integrate a band pass switch-capacitor anti-alias input filter, a 14-bit resolution analog-to-digital converter, four microprocessor-compatible serial port modes, a 14-bit resolution digital-to-analog converter and a low pass switch capacitor output-reconstruction filter. Any device capable of performing the functions of TLC32040 or TLC32041 are satisfactory analog-to-digital converters.

Digitized signal processor 28 allows intelligent programmable sensor 10 to perform a number of different functions. Digitized signal processor 28 processes the data that digitized signal 26 carries according to instructions from programmable memory 30. The instructions from programmable memory 30 have their origin in supervisor monitor/control computer 44. Results 32, therefore, comprise digital data signals that have been processed according to instructions from supervisor monitor/control computer 44. Because results 32 are processed according to the control instructions from computer 44, intelligent programmable sensor system 10 supplies information to computer 44 that is much easier to process and much simpler to transmit over systems communications bus 38 than raw analog signal data from sensing transducer 12. Program memory 30 provides a standard non-volatile memory that allows the sensor device to retain its processing instructions and data output characteristics until reprogramming occurs.

The TMS320 family of 16/32-bit single-chip digital signal processors manufactured by Texas Instruments of Dallas, Texas, have digital signal processor cores that satisfy the requirements of digital signal processor 28. Digital signal processors from that family have a special digital signal processing instruction set that provides a digital signal processor capable of executing 12.8 million instructions per second. This execution rate generally handles the processing requirements of instructions from program memory 30 for most sensing applications. The preferred embodiment of the present invention may use, however, any digital signal processor capable of receiving input from program memory 30 and digitized signal 26 to generate results 32 and transmit those results to configuration and results bus 34.

Configuration and results bus 34 links communications interface 36 to various elements including configurable analog signal conditioner 16 and configurable analog-to-digital converter 22. Configuration and results bus 34 receives supervisor commands, including configuration commands and processing commands, from supervisor monitor/control computer44 through communications interface 36. The configuration commands are sent by configuration and results bus 34 to configurable memory 18 and configurable memory 24. These configure analog signal conditioner 16 and analog-to-digital converter 22 according to the directives of supervisor computer 44 to change the way that signal conditioner 16 and analog-to-digital converter 22 condition analog signal 14 and convert analog signal 20, respectively.

Configuration and results bus 34 also operates to control the data processing of digital signal processor 28 and program memory 30. In response to results 32, supervisor computer 44 may direct that digital signal processor 28 process digitized signal 26 differently. In such event, supervisor computer 44 generates a different set of processing commands and sends these processing commands via systems communications bus 38 to communications interface 36. Communications interface 36 directs these commands over configuration and results bus 34 to program memory 30. Program memory 30 stores these different commands and sends them to digital signal processor 28. With these different commands, digital signal processor 28 processes digitized signal 26 to generate a different set of results 32 back to configuration and results bus 34. Finally, configuration and results bus 34 relays these different processed results 32 to supervisor computer 44 via communication interface 36 and systems communications bus 38. Thus, configuration and results bus 34 operates as the central data communications path with intelligent programmable sensor 10 of the present invention.

System communications bus 38 is a low-level communications bus that may be either a parallel or serial link among intelligent sensors, such as intelligent programmable sensors 40 and 42, and supervisor computer 44. Supervisor monitor/control computer 44 may be any data processing device capable of performing the monitor and control functions described above.

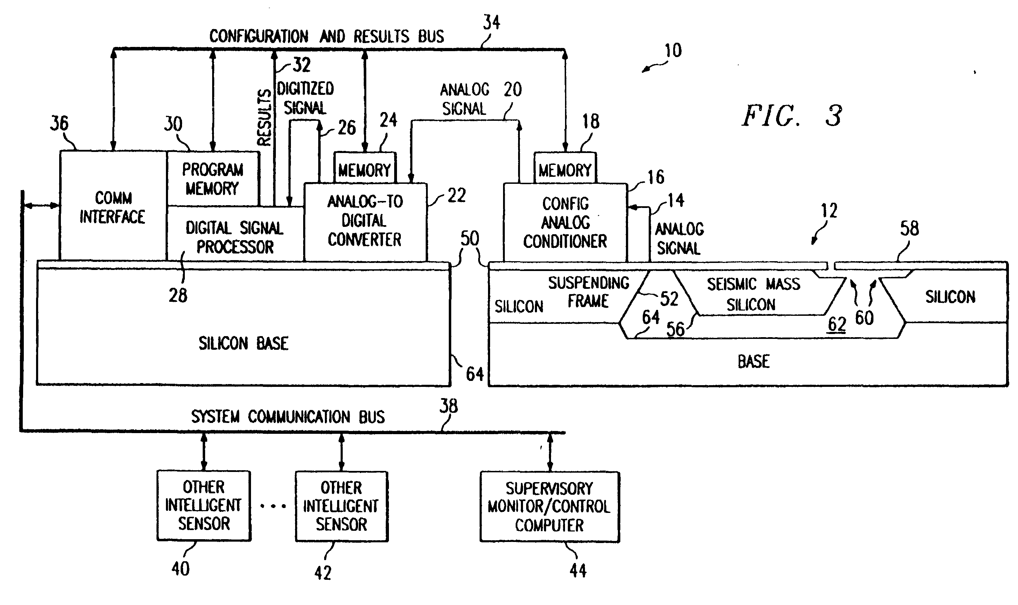

FIGURE 3 shows an alternative embodiment of the present invention. That embodiment comprises, on a single silicon base, sensing transducer 12, configurable analog signal conditioner 16 and configurable memory 18. On a separate silicon base appear configurable analog-to-digital converter 22 with configurable memory 24, program memory 30, digital signal processor 28, configuration and results bus 34 and communication interface 36. This 2-chip configuration still provides a compact and highly integrated pair of devices of the intelligent programmable sensor 10 of the present invention. This embodiment also has the flexibility missing in prior silicon sensors. This embodiment also allows the user to program analog signal conditioner 16, both upon initial installation in the particular application and in real-time according to the user's analyses of results 32.

Referring now to the operation of the intelligent programmable sensor 10, the following describes a potential application of a silicon accelerometer sensor incorporating the present invention. In the field of machine diagnostics, machine operators use sensors to generate raw information that some human expert (or computer program) must interpret. These sensors, whether as silicon sensors or otherwise, produce massive amounts of data that document machine vibrations over time.

Intelligent programmable sensor 10 together with system communications bus 38 and supervisor monitor/control computer 44 of present invention permit removing the human expert from numerous machine diagnostic procedures. This is Because intelligent programmable sensor 10 incorporates sufficient data processing capability for supervisor monitor/control computer 44 to store processed digital data, perform analyses, and make decisions necessary for machine diagnostic procedures. For such an application, supervisor monitor/ control computer 44 may reprogram intelligent programmable sensor 10 according to a decision making program within supervisor monitor/control computer 44. Thus, for a machine diagnostics application, if supervisor monitor/control computer 44 were to receive from digital signal processor 28 results 32 that indicate a machine is beginning to act abnormally by reaching certain operational set points, supervisor computer 44 may direct program instructions to program memory 30 to change the mode of digital signal processor 28 operation.

These different commands may, for example, direct digital signal processor 28 to take a closer look at a more refined frequency of machine vibration for the purpose of isolating a component that may be failing. At the same time, supervisor computer 44 may direct configurable memory 18 and configurable memory 24 to change the operation of analog signal conditioner 16 and analog-to-digital converter, respectively. For example, supervisor monitor/control computer 44 may direct analog signal conditioner 16 to increase the gain of analog signal 20 that it sends to analog-to-digital converter 22. Supervisor monitor/control computer 44, for example, may further direct analog-to-digital converter 22 to increase the bit rate of digitized signal 26. These changes increase the resolution and increase the frequency band width of vibration analyses for vibrations that transducer 12 senses. The results 32 that these changes yield may be critical to isolate a particular failing component before the component prohibits machine operation or could indicate an approximate estimated time before that component fails. Intelligent programmable sensor 10, therefore, can produce substantial improvements in machine diagnosis and operation.

Although this description describes the invention with reference to the above specific embodiments, the claims, and not this description limit the scope of the invention. Various modifications of the disclosed embodiment, as well as alternative embodiments of the invention will become apparent to persons skilled in the art upon reference to the above description. Therefore, the appended claims will cover such modifications that fall within the true scope of the invention.

By way of one example of a change in embodiment, system 38 can be, for example, a wireless transmission line so that a system can send instructions from remote locations.

## Claims

1. An intelligent programmable sensing apparatus using elements mounted on a silicon base, said elements comprising:
a transducer (12) for sensing physical variables and generating a plurality of raw analog signals representing said sensed physical variables; and
a configurable analog signal conditioner (16) receiving said raw signals from said transducer (12), said configurable analog signal conditioner (16) conditioning said raw analog signals to transmit conditioned analog signals, said configurable analog signal conditioner(16) including:
a first configurable memory (18) for storing at least one signal conditioning instruction for directing said configurable analog signal conditioner (16), said first configurable memory (18) being reprogrammable to contain different sets of signal conditioning instructions at different times and being adapted for connection to an external programming device supplying the different sets of signal conditioning instructions.

2. An apparatus according to claim 1 wherein said apparatus includes:
a configurable analog-to-digital converter (22) on a silicon base for receiving said conditioned analog signals and converting said conditioned analog signals into a plurality of digitized signals.

3. An apparatus according to claim 2, including a second configurable memory (24) on a silicon base and integral to said configurable analog-to-digital converter (22), said second configurable memory (24) for storing at least one signal converting instruction for directing said configurable analog-to-digital converter (22), said second configurable memory (24) being reprogrammable to contain different signal converting instructions at different times and being adapted for connection to an external programming device supplying the different sets of signal converting instructions.

4. An apparatus according to claim 3, including a digital signal processor (28) on said silicon base and in communication with said analog-to-digital converter (22) for processing said digitized signals from said configurable analog-to-digital converter (22).

5. An apparatus according to claim 4, including a program memory (30) on a silicon base and in communication with said digital signal processor (28) for storing a plurality of program instructions for controlling digitized signal processing and directing said digital signal processor (28) to process said digitized signals according to said program instructions, said program memory (30) being reprogrammable to contain different program instructions for controlling and directing said digital signal processor (28) at different times and being adapted for connection to an external programming device supplying the different program instructions.

6. An apparatus according to claim 5, including a configuration and results bus (34) on a silicon base and in communication with said first configurable memory (18) of said analog signal conditioner (16), said second configurable memory (24) of said analog-to-digital converter (22), said program memory (30), and said digital signal processor (28) for directing communications throughout said intelligent programmable sensing apparatus.

7. An apparatus according to claim 6 wherein said apparatus communicates with external circuitry and wherein said apparatus includes a communications interface (36) residing on a silicon base and in communication with said configuration and results bus (34) for interfacing communication signals between said apparatus and said external circuitry.

8. An apparatus according to any one of claims 2 to 7 wherein all the elements of the apparatus are mounted on a single silicon base.

9. An apparatus according to any one of claims 2 to 7 wherein the elements of the apparatus are mounted on at least two silicon bases.

10. An apparatus according to any one of the preceding claims suitable for diagnostics analyses in which the transducer (12) is an accelerometer.

11. An apparatus according to claim 10 including:
circuitry for monitoring said conditioned analog output signals and
circuitry controlled jointly by said signal conditioning instructions and by said monitored conditioned analog output signal for changing said signal conditioner (16).

12. A method of sensing a physical variable using an intelligent programmable sensing apparatus according to any one of the preceding claims comprising the steps of:
sensing physical variables with said transducer and generating a plurality of raw signals representing said sensed physical variables;
receiving said raw signals from said transducer in said configurable analog signal conditioner;
conditioning said raw signals in said configurable analog signal conditioner;
transmitting a plurality of conditioned signals from said configurable analog signal conditioner; and
storing at least one signal conditioning instruction for directing operations of said analog configurable signal conditioner in said first configurable memory, said storing including reprogramming said first configurable memory to contain different sets of signal conditioning instructions at different times and said storing including receiving the different sets of signal conditioning instructions from an external programming device.

13. A method according to claim 12, including the step of receiving said conditioned signals and converting said conditioned signals into a plurality of digitized signals in a configurable analog-to-digital converter.

14. A method according to claim 13, including the step of digitally processing said digitized signals from said configurable analog-to-digital converter using a digital signal processor.

15. A method according to claim 14, including the steps of storing in a program memory a plurality of program instructions for controlling the processing of said digitized signals and applying said instructions to direct said digital signal processor to process said digitized signals, said storing including reprogramming said program memory to contain different sets of program instructions at different times and said storing including receiving the different sets of program instructions from an external programming device.

16. A method according to claim 14 or 15 including the step of storing at least one signal converting instruction to control said configurable analog-to-digital converter in a second configurable memory, said storing including reprogramming said second configurable memory to contain different sets of signal converting instructions at different times and said storing including receiving the different sets of signal converting instructions from an external programming device.

17. A method according to claim 16, including the step of directing digital signal communications among said configurable memory of said signal conditioner, said configurable memory of said analog-to-digital converter, said program memory, and digital signal processor using a configuration and results bus on the single silicon base.

## Patentansprüche

1. Intelligente programmierbare Sensorvorrichtung mit Elementen, die auf einem Siliciumsockel befestigt sind, wobei die Elemente enthalten:
einen Wandler (12) zum Erfassen von physikalischen Variablen und zum Erzeugen mehrerer roher Analogsignale, die die erfaßten physikalischen Variablen repräsentieren; und
einen konfigurierbaren Analogsignalaufbereiter (16), der die Rohsignale aus dem Wandler (12) empfängt, wobei der konfigurierbare Analogsignalaufbereiter (16) die rohen Analogsignale aufbereitet, damit aufbereitete Analogsignale übertragen werden, wobei der konfigurierbare Analogsignalaufbereiter (16) enthält:
einen ersten konfigurierbaren Speicher (18) zum Speichern von wenigstens einem Signalaufbereitungsbefehl zum Anweisen des konfigurierbaren Analogsignalaufbereiters (16), wobei der erste konfigurierbare Speicher (18) umprogrammierbar ist, um verschiedene Gruppen von Signalaufbereitungsbefehlen an verschiedenen Zeitpunkten zu erhalten, und an eine erste Programmiervorrichtung anschließbar ist, die die verschiedenen Gruppen von Signalaufbereitungsbefehlen liefert.

2. Vorrichtung nach Anspruch 1, bei welcher die Vorrichtung enthält:
einen konfigurierbaren Analog/Digital-Umsetzer (22) auf einem Siliciumsockel für den Empfang der aufbereiteten Analogsignale und zum Umsetzen der aufbereiteten Analogsignale in mehrere digitalisierte Signale.

3. Vorrichtung nach Anspruch 2, mit einem zweiten konfigurierbaren Speicher (24) auf einem Siliciumsockel in integraler Verbindung mit dem konfigurierbaren Analog/Digital-Umsetzer (22), wobei der zweite konfigurierbare Speicher (24) der Speicherung wenigstens eines Signalaufbereitungsbefehls zum Anweisen des konfigurierbaren Analog/Digital-Umsetzers (22) dient, und der zweite konfigurierbare Speicher (24) umprogrammierbar ist, um an verschiedenen Zeitpunkten verschiedene Signalaufbereitungsbefehle zu enthalten, und an eine externe Programmiervorrichtung anschließbar ist, die die verschiedenen Gruppen von Signalaufbereitungsbefehlen liefert.

4. Vorrichtung nach Anspruch 3, mit einem digitalen Signalprozessor (28) auf dem Siliciumsockel in Verbindung mit dem Analog/Digital-Umsetzer (22) zum Verarbeiten der digitalisierten Signale aus dem konfigurierbaren Analog/Digital-Umsetzer (22).

5. Vorrichtung nach Anspruch 4, mit einem Programmspeicher (30) auf einem Siliciumsockel in Verbindung mit dem digitalen Signalprozessor (28) zum Speichern mehrerer Programmbefehle zum Steuern der Verarbeitung der digitalisierten Signale und zum Anweisen des digitalen Signalprozessors (28) zur Verarbeitung der digitalisierten Signale entsprechend den Programmbefehlen, wobei der Programmspeicher (30) umprogrammierbar ist, um an verschiedenen Zeitpunkten verschiedene Programmbefehle zum Steuern und Anweisen des digitalen Signalprozessors (28) zu enthalten, und an eine externe Programmiervorrichtung anschließbar ist, die die verschiedenen Programmbefehle liefert.

6. Vorrichtung nach Anspruch 5, mit einem Aufbereitungs- und Ergebnisbus (34) auf einem Siliciumsockel in Verbindung mit dem ersten konfigurierbaren Speicher (18) des Analogsignalaufbereiters (16), dem zweiten konfigurierbaren Speicher (24) des Analog/Digital-Umsetzers (22), dem Programmspeicher (30) und dem Digitalsignalprozessor (28) zum Lenken von Übertragungen durch die gesamte intelligente programmierbare Sensorvorrichtung.

7. Vorrichtung nach Anspruch 6, bei welcher die Vorrichtung mit einer externen Beschaltung in Übertragungsverbindung steht und bei welcher die Vorrichtung eine Übertragungsschnittstelle (36) enthält, die sich auf einem Siliciumsockel befindet und mit dem Aufbereitungs- und Ergebnisbus (34) in Verbindung steht, um Übertragungssignale zwischen der Vorrichtung und der externen Beschaltung zu übertragen.

8. Vorrichtung nach einem der Ansprüche 2 bis 7, bei welcher alle Elemente der Vorrichtung auf einem einzigen Siliciumsockel angebracht sind.

9. Vorrichtung nach einem der Ansprüche 2 bis 7, bei welcher die Elemente der Vorrichtung auf wenigstens zwei Siliciumsockeln angebracht sind.

10. Vorrichtung nach einem der vorhergehenden Ansprüche mit Eignung für diagnostische Analysen, wobei der Wandler (12) ein Beschleunigungsmesser ist.

11. Vorrichtung nach Anspruch 10, enthaltend:
eine Schaltungsanordnung zum Überwachen der aufbereiteten analogen Ausgangssignale und
eine Schaltungsanordnung, die gemeinsam von den Signalaufbereitungsbefehlen und den überwachten aufbereiteten analogen Ausgangssignalen gesteuert wird, um den Signalaufbereiter (16) zu ändern.

12. Verfahren zum Erfassen einer physikalischen Variablen unter Verwendung einer intelligenten programmierbaren Sensorvorrichtung nach einem der vorhergehenden Ansprüche, enthaltend die Schritte:
Erfassen physikalischer Variabler mit dem Wandler und Erzeugen mehrerer Rohsignale, die die erfaßten physikalischen Variablen repräsentieren;
Empfangen der Rohsignale aus dem Wandler in dem konfigurierbaren Analogsignalaufbereiter;
Aufbereiten der Rohsignale in dem konfigurierbaren Analogsignalaufbereiter;
Übertragen mehrerer aufbereiteter Signale aus dem konfigurierbaren Analogsignalaufbereiter; und
Speichern wenigstens eines Signalaufbereitungsbefehls zum Steuern von Vorgängen des konfigurierbaren Analogsignalaufbereiters in dem ersten konfigurierbaren Speicher, wobei das Speichern das Umprogrammieren des ersten konfigurierbaren Speichers enthält, damit er verschiedene Gruppen von Signalaufbereitungsbefehlen an verschiedenen Zeitpunkten enthält, und das Speichern das Empfangen der unterschiedlichen Gruppen von Signalaufbereitungsbefehlen aus einer externen Programmiervorrichtung umfaßt.

13. Verfahren nach Anspruch 12, enthaltend den Schritt des Empfangens der Aufbereitungssignale und des Umsetzens der aufbereiteten Signale in mehrere digitalisierte Signale in einem konfigurierbaren Analog/Digital-Umsetzer.

14. Verfahren nach Anspruch 13, enthaltend den Schritt des digitalen Verarbeitens der digitalisierten Signale aus dem konfigurierbaren Analog/Digital-Umsetzer unter Verwendung eines digitalen Signalprozessors.

15. Verfahren nach Anspruch 14, enthaltend die Schritte des Speicherns mehrerer Programmbefehle zum Steuern der Verarbeitung der digitalisierten Signale in einen Speicher und zum Anlegen der Befehle zum Anweisen des digitalen Signalprozessors zur Verarbeitung der digitalisierten Signale, wobei das Speichern das Umprogrammierbaren des Programmspeichers umfaßt, damit dieser verschiedene Gruppen von Programmbefehlen an verschiedenen Zeitpunkten enthält, und das Speichern das Empfangen der verschiedenen Gruppen von Programmbefehlen aus einer externen Programmiervorrichtung umfaßt.

16. Verfahren nach Anspruch 14 oder 15, enthaltend den Schritt des Speicherns von wenigstens einem Signalaufbereitungsbefehl zum Steuern des konfigurierbaren Analog/Digital-Umsetzers in einen zweiten konfigurierbaren Speicher, wobei das Speichern das Umprogrammierbaren des zweiten konfigurierbaren Speichers umfaßt, damit dieser unterschiedliche Gruppen von Signalumsetzungsbefehlen an verschiedenen Zeitpunkten enthält, und das Speichern das Empfangen der unterschiedlichen Gruppen von Signalumsetzungsbefehlen aus einer externen Programmiervorrichtung umfaßt.

17. Verfahren nach Anspruch 16, enthaltend den Schritt des Lenkens digitaler Signalübertragungen zwischen dem konfigurierbaren Speicher des Signalaufbereiters, dem konfigurierbaren Speicher des Analog/Digital-Umsetzers, dem programmierbaren Speicher und dem digitalen Signalprozessor unter Verwendung eines Aufbereitungs- und Ergebnisbusses auf einem einzigen Siliciumsockel.

## Revendications

1. Appareil de détection intelligent et programmable utilisant des éléments sur une base de silicium, lesdits éléments comprenant:
un transducteur (12) pour détecter des variables physiques et pour générer une pluralité de signaux analogiques non traités représentant lesdites variables physiques détectées; et
un conditionneur (16) configurable de signaux analogiques recevant lesdits signaux non traités en provenance dudit transducteur (12), ledit conditionneur (16) configurable de signaux analogiques conditionnant lesdits signaux analogiques non traités pour transmettre des signaux analogiques conditionnés, ledit conditionneur (16) configurable de signaux analogiques comportant:
une première mémoire configurable (18) pour stocker au moins une instruction de conditionnement de signaux afin de diriger ledit conditionneur (16) configurable de signaux analogiques, ladite première mémoire configurable (18) étant reprogrammable pour contenir différentes séries d'instructions de conditionnement de signaux à différents instants et étant apte à être connectée à un dispositif de programmation extérieur envoyant les différentes séries d'instructions de conditionnement de signaux.

2. Appareil selon la revendication 1 dans lequel ledit appareil comporte:
un convertisseur analogique-numérique configurable (22) sur une base de silicium pour recevoir lesdits signaux analogiques conditionnés et pour convertir lesdits signaux analogiques conditionnés en une pluralité de signaux numérisés.

3. Appareil selon la revendication 2, comportant une seconde mémoire configurable (24) sur une base de silicium et faisant partie intégrante dudit convertisseur analogique-numérioque (22), ladite seconde mémoire configurable (24) stockant au moins une instruction de conversion de signaux afin de diriger ledit convertisseur analogique-numérique configurable (22), ladite seconde mémoire configurable (24) étant reprogrammable pour contenir différentes instructions de conversion de signaux à différents instants et étant apte à être connectée à un dispositif de programmation extérieur envoyant les différentes séries d'instructions de conversion de signaux.

4. Appareil selon la revendication 3, comportant un dispositif (28) de traitement de signaux numériques sur ladite base de silicium et en communication avec ledit convertisseur analogique-numérique (22) pour traiter lesdits signaux numérisés en provenance dudit convertisseur analogique-numérique configurable (22).

5. Appareil selon la revendication 4, comportant une mémoire (30) de programmes sur une base de silicium et en communication avec ledit dispositif (28) de traitement de signaux numériques pour stocker une pluralité d'instructions de programmes afin de commander le traitement des signaux numérisés et de diriger ledit dispositif (28) de traitement de signaux numériques afin de traiter lesdits signaux numérisés en fonction desdites instructions de programmes, ladite mémoire (30) de programmes étant reprogrammable pour contenir différentes instructions de programmes afin de commander et de diriger ledit dispositif (28) de traitement de signaux numériques à différents instants et étant apte à être connectée à un dispositif de programmation extérieur envoyant les différentes instructions de programmes.

6. Appareil selon la revendication 5, comportant un bus (34) de configuration et de résultats sur une base de silicium et en communication avec ladite première mémoire configurable (18) dudit conditionneur (16) de signaux analogiques, ladite seconde mémoire configurable (24) dudit convertisseur analogique-numérique (22), ladite mémoire de programmes (30), et ledit dispositif (28) de traitement de signaux numériques, pour diriger des communications par l'intermédiaire dudit appareil de détection intelligent et programmable.

7. Appareil selon la revendication 6 dans lequel ledit appareil communique avec un circuit extérieur et dans lequel ledit appareil comporte une interface (36) de communications résidant sur une base de silicium et en communication avec ledit bus (34) de configuration et de résultats pour interfacer les signaux de communication entre ledit appareil et ledit circuit extérieur.

8. Appareil selon l'une quelconque des revendications 2 à 7 dans lequel tous les éléments de l'appareil sont montés sur une seule base de silicium.

9. Appareil selon l'une quelconque des revendications 2 à 7 dans lequel les éléments de l'appareil sont montés sur au moins deux bases de silicium.

10. Appareil selon l'une quelconque des revendications précédentes approprié pour des analyses de diagnostics dans lequel le transducteur (12) est un accéléromètre.

11. Appareil selon la revendication 10 comportant:
un circuit pour surveiller lesdits signaux de sortie analogiques conditionnés et
un circuit commandé conjointement par lesdites instructions de conditionnement de signaux et par ledit signal de sortie analogique conditionné et vérifié, pour modifier ledit conditionneur (16) de signaux.

12. Procédé de détection d'une variable physique utilisant appareil de détection intelligent et programmable selon l'une quelconque des revendications précédentes comprenant les étapes suivantes:
détection de variables physiques avec ledit transducteur et génération d'une pluralité de signaux non traités représentant lesdites variables physiques détectées;
réception desdits signaux non traités en provenance dudit transducteur dans ledit conditionneur configurable de signaux analogiques;
conditionnement desdits signaux non traités dans ledit conditionneur configurable de signaux analogiques;
transmission d'une pluralité de signaux conditionnés en provenance dudit conditionneur configurable de signaux analogiques; et
stockage d'au moins une instruction de conditionnement de signaux pour diriger des opérations dudit conditionneur configurable de signaux analogiques dans ladite première mémoire configurable, ledit stockage comportant la reprogrammation de ladite première mémoire configurable pour contenir différentes séries d'instructions de conditionnement de signaux à différents instants et ledit stockage comportant la réception des différentes séries d'instructions de conditionnement de signaux en provenance d'un dispositif de programmation extérieur.

13. Procédé selon la revendication 12, comportant l'étape de réception desdits signaux conditionnés et de conversion desdits signaux conditionnés en une pluralité de signaux numérisés dans un convertisseur configurable analogique-numérique.

14. Procédé selon la revendication 13, comportant l'étape de traitement numérique desdits signaux numérisés en provenance dudit convertisseur configurable analogique-numérique en utilisant un dispositif de traitement de signaux numériques.

15. Procédé selon la revendication 14, comportant les étapes de stockage dans une mémoire de programmes d'une pluralité d'instructions de programmes pour commander le traitement desdits signaux numérisés et pour appliquer lesdites instructions afin de diriger ledit dispositif de traitement de signaux numériques afin de traiter lesdits signaux numérisés, ledit stockage comportant la reprogrammation de ladite mémoire de programmes pour contenir différents séries d'instructions de programmes à différents instants et ledit stockage comportant la réception des différentes séries d'instructions de programmes en provenance d'un dispositif de programmation extérieur.

16. Procédé selon la revendication 14 ou 15 comportant l'étape de stockage d'au moins une instruction de conversion de signaux pour commander ledit convertisseur configurable analogique-numérique dans une seconde mémoire configurable, ledit stockage comportant la reprogrammation de ladite seconde mémoire configurable afin de contenir différentes séries d'instructions de conversion de signaux à différents instants et ledit stockage comportant la réception des différentes séries d'instructions de conversion de signaux en provenance d'un dispositif de programmation extérieur.

17. Procédé selon la revendication 16, comportant l'étape de direction de communications de signaux numériques parmi ladite mémoire configurable dudit conditionneur de signaux, ladite mémoire configurable dudit convertisseur analogique-numérique, ladite mémoire de programmes, et le dispositif de traitement de signaux numériques en utilisant un bus de configuration et de résultats sur la seule base de silicium.
